# EUROPÄISCHE PATENTSCHRIFT

(11) **EP 2 984 041 B1**
(45) Veröffentlichungstag und Bekanntmachung des Hinweises auf die Patenterteilung: **10.01.2018**
(21) Anmeldenummer: 14717690.3
(22) Anmeldetag: 28.03.2014
(51) Int. Cl.: C02F 1/20, B01D 65/02, C02F 101/32

(54) **REINIGUNG VON LAGERSTÄTTENWASSER**
PURIFICATION OF STORAGE FACILITY WATER
NETTOYAGE D'EAUX DE GISEMENT

(30) Priorität: 09.04.2013 EP 13162899
(43) Veröffentlichungstag der Anmeldung: 17.02.2016
(73) Patentinhaber: Wintershall Holding GmbH, 34119 Kassel (DE)
(72) Erfinder: HINNERS, Georg, 49393 Lohne (Oldenburg) (DE); POSCHMANN, Marc, 76835 Hainfeld (DE); THEMANN, Gerhard, 49377 Vechta (DE); WOLF, Andreas, 36448 Bairoda (DE)
(74) Vertreter: BASF IP Association
(86) Internationale Anmeldenummer: PCT/EP2014/056290
(87) Internationale Veröffentlichungsnummer: WO 2014/166760

(56) Entgegenhaltungen:
- FR-A1- 2 979 338
- "Natural Gas Background", , 1. Januar 2011 (2011-01-01), XP055075169, Gefunden im Internet: URL:www.naturalgas.org/overview/background .asp [gefunden am 2013-08-14]
- WALDIE ET AL: "Removal of Dissolved Aromatics from Water", CHEMICAL ENGINEERING RESEARCH AND DESIGN, PART A, INSTITUTION OF CHEMICAL ENGINEERS, XX, Bd. 76, Nr. 5, 1. Juli 1998 (1998-07-01), Seiten 562-570, XP022536388, ISSN: 0263-8762, DOI: 10.1205/026387698525243
- PHILLIPS J B: "Removal of benzene from industrial wastewater by vapor stripping", JOURNAL OF ENVIRONMENTAL SCIENCE AND HEALTH. PART A. TOXIC : HAZARDOUS SUBSTANCES & ENVIRONMENTAL ENGINEERING, NEW YORK : DEKKER, Bd. 30, Nr. 5, 1. Juni 1995 (1995-06-01), Seiten 1075-1090, XP009157312, ISSN: 0360-1226, DOI: 10.1080/10934529509376250 [gefunden am 2008-12-15]

## Beschreibung

Die vorliegende Erfindung bezieht sich auf ein einfaches und verbessertes Verfahren zum Entfernen von aromatischen Kohlenwasserstoffen aus Lagerstättenwasser durch die Verwendung von Erdölbegleitgas als Strippgas.

Bei der Förderung von Erdöl wird grundsätzlich ein Erdöl-/Wassergemisch aus der Erde gefördert. Bei neu erschlossenen Ölfeldern besteht dieses Gemisch aus dem bereits in den erdölführenden Schichten enthaltenden Formationswasser sowie dem Öl, das gefördert wird. Bei älteren Feldern muss zur Förderung des Erdöl-/Wassergemisches durch Injektionsbrunnen, die in einer gewissen Entfernung zum Förderbrunnen angelegt werden, Wasser in die Erdölformation gepresst werden. Durch den so aufgebauten Druck fließt das Wasser in der erdölführenden Schicht zum Förderbrunnen und trägt dabei Erdöl mit sich, das dann zusammen mit dem Injektionswasser und eventuell vorhandenem Formationswasser an dem Förderbrunnen entnommen wird.

Dieses Erdöl-/Wassergemisch muss nun getrennt werden, um für die Weiterverarbeitung geeignetes Rohöl zu erhalten. Der Wassergehalt des Erdöl-/Wassergemisches ist dabei von Ölfeld zu Ölfeld unterschiedlich und ändert sich auch mit der fortschreitenden Ausbeutung des Ölfelds.

Zur Trennung des Erdöl-/Wassergemisches werden in der Regel Phasentrenner eingesetzt, d.h. das Erdöl-/Wassergemisch wird in einen Behälter überführt, in dem sich das leichtere Öl und das schwere Wasser unter Einfluss der Gravitation entmischen können, sodass sich eine Ölphase an der Oberfläche und eine Wasserphase (Lagerstättenwasser) im unteren Bereich bildet. Zusätzlich wird mit der Druckreduzierung Erdölbegleitgas freigesetzt, das u. a. für Heizzwecke eingesetzt wird.

Das Lagerstättenwasser kann wiederum in die Erdölformation gepresst werden. Dazu muss das Lagerstättenwasser durch Rohrleitungssysteme transportiert werden, die aus Polyethylen gefertigt sein können. Feldleitungssysteme für Lagerstättenwasser aus Polyethylen werden insbesondere bei der Förderung von Erdöl aus Feldern mit engen Arbeitskorridoren verwendet, da sich Rohrleitungen aus Polyethylen als Endlosmaterial von einer Trommel einfach und platzsparend verlegen lassen. Neben ihrer leichten Verarbeitbarkeit zeichnen sich Rohrleitungen aus Polyethylen ebenfalls durch eine hohe Korrosionsresistenz gegenüber salzhaltigem Lagerstättenwasser aus.

Lagerstättenwasser enthält einen Anteil an aromatischen Restkohlenwasserstoffen in einer Konzentration von ca. 1 bis 10 mg/l, in Ausnahmefällen auch bis 700 mg/l, die auch als BTEX-Aromaten (Benzol, Toluol, Ethylbenzol, Xylol) bezeichnet werden. Diese aromatischen Restkohlenwasserstoffe führen zu einer negativen Beeinträchtigung der Beständigkeit der Rohrleitungen aus Polyethylen, da sie - wenn auch sehr langsam - in die Polyethylenmatrix diffundieren. Bei der Verwendung von Rohrleitungen aus Polyethylen zum Transport von Lagerstättenwasser ist daher deren Integrität zu gewährleisten, da Schäden an den Rohrleitungen zu einer Kontamination des angrenzenden Erdreichs und Grundwassers mit aromatischen Kohlenwasserstoffen führen können. Das Landesamt für Bergbau, Energie und Geologie in Clausthal-Zellerfeld, Deutschland, hat daher in einer Anordnung verfügt, dass Lagerstättenwasser maximal eine Konzentration von 3 mg/l BTEX-Aromaten aufweisen darf, wenn es mithilfe von Rohrleitungen aus Polyethylen transportiert wird.

DE 100 26 135 A1 beschreibt ein Verfahren zur Entfernung von Kohlenwasserstoffen aus der Ablauge von Laugewäschern, wobei Methan als Strippgas verwendet wird. Das Verfahren wird bei vergleichsweise niedrigen Temperaturen in einer Bodenkolonne durchgeführt. Auch das Dokument FR 2 979 338 A1 offenbart ein aus der Stand der Technik bekanntes Verfahren zur Aufarbeitung von Wasser enthaltend aromatische Kohlenwasserstoffe.

FR 2 979 339 A1 offenbart ein Verfahren zur Reinigung von Wasser, das mit aromatischen Kohlenwasserstoffen beladen ist, unter Nutzung von Erdgas als Strippgas. Erdgas unterscheidet sich grundsätzlich in seiner Zusammensetzung von Erdölbegleitgas, da es einen besonders hohen Anteil an Methan aufweist (siehe u.a. Sicherheitsdatenblatt gemäß Verordnung (EG) Nr. 1907/2006 (REACH), § 5 GefStoffV, für Erdgas, getrocknet). In FR 2 979 339 A1 offenbartes Verfahren benötigt zudem einen Vordruck im Strippgas von 5 bis 6 bar, deren Erzeugung mit apparativem und energetischem Aufwand einhergeht. Der Grund liegt in der Form der Kontaktierung von Strippmedium und Wasser: Das Gas wird in ein stehendes Wasservolumen unter weitgehender Vernichtung seiner Druckenergie eingedüst. Dies ermöglicht dem Verfahren die Erzeugung feiner Bläschen, die zur Darstellung einer großen Schadstoffdurchtrittsfläche prozessbedingt notwendig sind. Das Verfahren nutzt keine Temperaturerhöhung zur Unterstützung des Reinigungsprozesses. So ist im bei in FR 2 979 339 A1 offenbartes Verfahren auch von einer Grobabtrennung der Aromaten zu sprechen, deren Restbeladung um ein Hundertfaches über der des hier vorgestellten Verfahrens liegt.

Es bestand daher ein Bedarf an einem einfachen und wirtschaftlichen Verfahren zum Entfernen von BTEX-Aromaten aus Lagerstättenwasser, das ohne großen konstruktiven Aufwand in die bestehende Anlagenstruktur zur Erdölförderung eingebaut werden kann.

Eine Aufgabe der vorliegenden Erfindung ist es daher, ein einfaches und wirtschaftliches Verfahren zum Entfernen von BTEX-Aromaten aus Lagerstättenwasser zur Verfügung zu stellen, das ohne großen konstruktiven Aufwand in die bestehende Anlagenstruktur zur Erdölförderung integriert werden kann.

Die vorstehend genannte Aufgabe wurde gelöst durch ein Verfahren zur Aufarbeitung von Wasser enthaltend aromatische Kohlenwasserstoffe ausgewählt aus der Gruppe bestehend aus Benzol, Toluol, Ethylbenzol und Xylol, umfassend wenigstens die folgenden Schritte
(i) Einführen eines Stroms (I) enthaltend Wasser und aromatische Kohlenwasserstoffe ausgewählt aus der Gruppe bestehend aus Benzol, Toluol, Ethylbenzol und Xylol in eine Kolonne,
(ii) in Kontakt bringen des Stroms (I) mit einem zweiten Strom (II) im Gegenstrom und
(iii) Abführen eines dritten Stroms (III) enthaltend Wasser und aromatische Kohlenwasserstoffe ausgewählt aus der Gruppe bestehend aus Benzol, Toluol, Ethylbenzol und Xylol, wobei die aromatischen Kohlenwasserstoffe in einer Konzentration ≤ 3 mg/l bezogen auf das Volumen des Stroms (III) vorliegen,
wobei der zweite Strom (II) Erdölbegleitgas enthält, das ≥ 30 Vol-% bis ≤ 75 Vol-% Methan umfasst.

Bevorzugt umfasst das Erdölbegleitgas ≥ 30 Vol-% bis ≤ 65 Vol-% Methan, besonders bevorzugt umfasst das Erdölbegleitgas ≥ 30 Vol-% bis ≤ 60 Vol-% Methan.

Überraschenderweise wurde gefunden, dass Erdölbegleitgas zum Entfernen von aromatischen Kohlenwasserstoffen aus Lagerstättenwasser genutzt werden kann, obwohl es bereits eine Vorbeladung mit aromatischen Kohlenwasserstoffen, wie Benzol, Toluol, Ethylbenzol und Xylol aufweist, so dass der Fachmann erwartet hätte, dass das Reinigungsvermögen von Erdölbegleitgas gering ist.

Je nach geologischem Ursprung und in Abhängigkeit von der Prozessführung bei der Aufarbeitung weist Erdölbegleitgas eine unterschiedliche Zusammensetzung auf. Im Allgemeinen kann Erdölbegleitgas unabhängig von dessen Ursprung oder dessen Zusammensetzung verwendet werden. Bevorzugt weist das Erdölbegleitgas ≥ 50 Vol-% bis ≤ 97 Vol-% C₁-C₁₀-Kohlenwasserstoffe auf, bezogen auf die gesamte Zusammensetzung des Erdölbegleitgases, besonders bevorzugt ≥ 70 Vol-% bis ≤ 97 Vol-%, ganz besonders bevorzugt ≥ 80 Vol-% bis ≤ 97 Vol-%.

Bevorzugt werden die C₁-C₁₀-Kohlenwasserstoffe ausgewählt aus der Gruppe bestehend aus Methan, Ethan, Propan, Butan, Pentan, Hexan, Heptan, Oktan, Nonan und Decan. Butan, Pentan, Hexan, Oktan, Nonan und Decan liegen jeweils als Mischung ihrer Isomere vor. Daneben enthält das Erdölbegleitgas aromatische Kohlenwasserstoffe ausgewählt aus der Gruppe bestehend aus Benzol, Toluol, Ethylbenzol und Xylol in einer Menge von ≥ 0,01 Vol-% bis ≤ 0,1 Vol-%. Das Erdölbegleitgas kann weiterhin Bestandteile aufweisen, die nicht kohlenstoffhaltig sind, wie beispielsweise Schwefelwasserstoff, Kohlendioxid, Stickstoff, Helium und Argon. Bevorzugt liegt Stickstoff im Erdölbegleitgas in einer Menge von ≥ 2 Vol-% bis ≤ 12 Vol-%, besonders bevorzugt in einer Menge ≥ 2 Vol-% bis ≤ 10 Vol-%, vor. Bevorzugt liegt Kohlendioxid im Erdölbegleitgas in einer Menge von ≥ 0,5 Vol-% bis ≤ 20 Vol-%, besonders bevorzugt in einer Menge ≥ 1 Vol-% bis ≤ 15 Vol-%, besonders bevorzugt in einer Menge ≥ 5 Vol-% bis ≤ 10 Vol%, vor. Schwefelwasserstoff, Kohlendioxid, Stickstoff, Helium und Argon liegen jeweils allerdings in solchen geringen Mengen vor, dass sie die Verbrennung des Erdölbegleitgases nicht negativ beeinträchtigen.

Bevorzugt weist das Erdölbegleitgas ≥ 50 Vol-% bis ≤ 97 Vol-% C₁-C₆-Kohlenwasserstoffe auf, bezogen auf die gesamte Zusammensetzung des Erdölbegleitgases, besonders bevorzugt ≥ 70 Vol-% bis ≤ 97 Vol-%, ganz besonders bevorzugt ≥ 80 Vol-% bis ≤ 97 Vol-%. Bevorzugt werden die C₁-C₆-Kohlenwasserstoffe ausgewählt aus der Gruppe bestehend aus Methan, Ethan, Propan, Butan, Pentan und Hexan.

Bevorzugt enthält das Erdölbegleitgas
≥ 30 Vol-% bis ≤ 65 Vol-% Methan,
≥ 5 Vol-% bis ≤ 20 Vol-% Ethan,
≥ 5 Vol-% bis ≤ 25 Vol-% Propan,
≥ 5 Vol-% bis ≤ 25 Vol-% Butane,
≥ 1 Vol-% bis ≤ 6 Vol-% Pentane und
≥ 1 Vol-% bis ≤ 5 Vol-% Hexane.

Das Erdölbegleitgas ist nach Austritt aus der Kolonne bevorzugt wasserdampfgesättigt.

Bevorzugt ist das erfindungsgemäß verwendete Wasser Lagerstättenwasser. Das Wasser, insbesondere das Lagerstättenwasser, weist aromatische Kohlenwasserstoffe ausgewählt aus der Gruppe bestehend aus Benzol, Toluol, Ethylbenzol und Xylol in einer Konzentration ≥ 2 mg/l bis ≤ 700 mg/l, besonders bevorzugt ≥ 2 mg/l bis ≤ 200 mg/l, ganz besonders bevorzugt ≥ 2 mg/l bis ≤ 25 mg/l, bezogen auf das Volumen des Wassers bzw. Lagerstättenwassers, auf.

Die Temperatur des Wassers, das in Schritt (i) verwendet wird, wird auf eine Temperatur im Bereich ≥ 40°C bis ≤ 80°C, bevorzugt im Bereich ≥ 50 °C bis ≤ 70 °C, eingestellt. Die Behandlung bei erhöhten Temperaturen ermöglicht dem erfindungsgemäßen Verfahren eine gesteigerte Reinigungsleistung gegenüber Verfahren, die auf die Beeinflussung dieses Prozessparameters verzichten. Die vom erfindungsgemäßen Verfahren benötigten Temperaturen entsprechen jenen, die von in Erdölbetrieben vorhandenen Heizungssystemen darstellbar sind. Auf diesem Weg können bereits vorhandene Anlagen in der Peripherie der Erdölförderung genutzt werden, so dass das erfindungsgemäße Verfahren besonders wirtschaftlich ist. Da das erfindungsgemäß verwendete Wasser bei erhöhten Temperaturen, wie beispielsweise 70°C verwendet wird, ist darauf zu achten, dass der pH-Wert so eingestellt wird, dass bei diesen Temperaturen keine Salzbildung erfolgt. Beispielsweise nimmt die Löslichkeit von Bariumsulfat mit steigender Temperatur ab. Abhängig von der Zusammensetzung des Lagerstättenwassers ist eine Einstellung des pH-Werts bevorzugt im Bereich ≥ 4 bis ≤ 6,5 erforderlich, um den Ausfall von Salzen (Scale-Bildung) zu verhindern.

Gemäß dem erfindungsgemäßen Verfahren wird der erste Strom (I) von oben über eine Schüttung oder Packung mit großer Oberfläche in eine Kolonne geleitet, während im Gegenstrom der zweite Strom (II) aufsteigt und am oberen Ende der Kolonne separat gesammelt und im Pendelgassystem zu den Heizungskesseln abgeleitet wird. Auf diesem Weg wird die Flüssigkeit von oben in die Kolonne eingeführt, während das Erdölbegleitgas von unten einströmt.

Es ist prinzipiell möglich, das erfindungsgemäße Verfahren bei einem beliebigen Druck auszuführen, beispielsweise bei einem Unterdruck oder bei Normaldruck. Bevorzugt wird das erfindungsgemäße Verfahren bei Normaldruck genutzt, um Betriebskosten und Investitionskosten für den Bau der Anlage einzusparen. Durch die Reduzierung des Betriebsdruckes in den Vakuumbereich hinein erhöht sich allerdings auch die Effizienz der Strippkolonne. In der Kolonne liegt der Druck im Bereich von ≥ 200 hPa bis ≤ 1500 hPa vor, bevorzugt im Bereich ≥ 300 hPa bis ≤ 1200 hPa, besonders bevorzugt im Bereich ≥ 900 hPa bis ≤ 1050 hPa. Auf das den Abreinigungsprozess negativ beeinflussende Aufbringen von Überdruck kann im erfindungsgemäßen Verfahren verzichtet werden, da im Wesentlichen keine stehende Flüssigkeitssäule vom aufsteigenden Gas durchdrungen werden muss. Dies macht das erfindungsgemäße Verfahren besonders wirtschaftlich, da auf die Verdichtung des Stripgases verzichtet werden kann. Der niedrige Systemdruck steigert zudem die Reinigungsleistung.

In Schritt (iii) wird das gereinigte Wasser, d. h. das Wasser, das eine geringere Konzentration an aromatischen Kohlenwasserstoffen aufweist, gesammelt und abgepumpt. Bevorzugt enthält der dritte Strom (III) aromatische Kohlenwasserstoffe ausgewählt aus der Gruppe bestehend aus Benzol, Toluol, Ethylbenzol und Xylol in einer Konzentration im Bereich ≥ 0,1 mg/l bis ≤ 1 mg/l auf, besonders bevorzugt im Bereich ≥ 0,2 mg/l bis ≤ 1 mg/l, ganz besonders bevorzugt im Bereich ≥ 0,2 mg/l bis ≤ 0,5 mg/l. Das erfindungsmäße Verfahren zeichnet sich dadurch aus, dass sehr geringe Konzentrationen von aromatischen Kohlenwasserstoffen im gereinigten Lagerstättenwasser erreicht werde können, ohne dass zusätzliche Reinigungsschritte erforderlich sind, die unter Umständen Sauerstoff benötigen, wie beispielsweise bei der weiteren biologischen Aufarbeitung von Lagerstättenwasser.

In einer ganz besonders bevorzugten Ausführungsform bezieht sich die vorliegende Erfindung auf ein Verfahren zur Aufarbeitung von Wasser enthaltend aromatische Kohlenwasserstoffe ausgewählt aus der Gruppe bestehend aus Benzol, Toluol, Ethylbenzol und Xylol, umfassend wenigstens die folgenden Schritte
(i) Einführen eines Stroms (I) enthaltend Wasser und aromatische Kohlenwasserstoffe ausgewählt aus der Gruppe bestehend aus Benzol, Toluol, Ethylbenzol und Xylol in eine Kolonne, wobei die aromatischen Kohlenwasserstoffe in einer Konzentration im Bereich ≥ 2 mg/l bis ≤ 700 mg/l, bevorzugt im Bereich ≥ 2 mg/l bis ≤ 50 mg/l, bezogen auf das Volumen des Stroms (III) vorliegen,
(ii) in Kontakt bringen des Stroms (I) mit einem zweiten Strom (II) im Gegenstrom und
(iii) Abführen eines dritten Stroms (III) enthaltend Wasser und aromatische Kohlenwasserstoffe ausgewählt aus der Gruppe bestehend aus Benzol, Toluol, Ethylbenzol und Xylol, wobei die aromatischen Kohlenwasserstoffe in einer Konzentration im Bereich ≥ 0,1 mg/l bis ≤ 1 mg/l bezogen auf das Volumen des Stroms (III) vorliegen,
wobei der zweite Strom (II) Erdölbegleitgas enthält, das ≥ 30 Vol-% bis ≤ 75 Vol-% Methan umfasst.

In einer noch weiter bevorzugten Ausführungsform bezieht sich die vorliegende Erfindung auf ein Verfahren zur Aufarbeitung von Wasser enthaltend aromatische Kohlenwasserstoffe ausgewählt aus der Gruppe bestehend aus Benzol, Toluol, Ethylbenzol und Xylol, umfassend wenigstens die folgenden Schritte
(i) Einführen eines Stroms (I) enthaltend Wasser und aromatische Kohlenwasserstoffe ausgewählt aus der Gruppe bestehend aus Benzol, Toluol, Ethylbenzol und Xylol in eine Kolonne,
   wobei in der Kolonne ein Druck im Bereich ≥ 200 hPa bis ≤ 1500 hPa vorliegt und die aromatischen Kohlenwasserstoffe in einer Konzentration im Bereich ≥ 2 mg/l bis ≤ 700 mg/l, bevorzugt im Bereich ≥ 2 mg/l bis ≤ 50 mg/l, bezogen auf das Volumen des Stroms (III) vorliegen,
(ii) in Kontakt bringen des Stroms (I) mit einem zweiten Strom (II) im Gegenstrom und
(iii) Abführen eines dritten Stroms (III) enthaltend Wasser und aromatische Kohlenwasserstoffe ausgewählt aus der Gruppe bestehend aus Benzol, Toluol, Ethylbenzol und Xylol, wobei die aromatischen Kohlenwasserstoffe in einer Konzentration im Bereich ≥ 0,1 mg/l bis ≤ 1 mg/l bezogen auf das Volumen des Stroms (III) vorliegen,
wobei der zweite Strom (II) Erdölbegleitgas enthält, das ≥ 30 Vol-% bis ≤ 75 Vol-% Methan umfasst.

Dabei ist das erfindungsgemäße Verfahren in der Lage, die beschriebene Abscheideleistung in einer Prozessstufe zu erreichen.

Das erfindungsgemäße Verfahren verzichtet auf den Eintrag von Sauerstoff. Dieser ist vielen Anwendungen, insbesondere in Öl- und Gasanwendungen nicht tolerierbar und müsste daher unter hohem Aufwand wieder abgeschieden werden, da zweiwertiges Eisen zu dreiwertigem Eisen oxidiert würde, was zu Ausfällungen und Betriebsstörungen führen kann.

Bevorzugt wird das erfindungsgemäße Verfahren kontinuierlich ausgeführt. Ein kontinuierliches Verfahren im Sinne dieser Erfindung ist ein Verfahren, bei dem die Zugabe des Wassers in die Kolonne und der Austrag des an aromatischen Kohlenwasserstoffen abgereicherten Wassers aus der Kolonne gleichzeitig, aber räumlich getrennt, stattfinden. Die kontinuierliche Verfahrensweise ist von wirtschaftlichem Vorteil, da Stillstandszeiten der Anlage vermieden werden.

Bevorzugt ist die Kolonne eine Füllkörperkolonne oder Bodenkolonne, besonders bevorzugt ist die Kolonne eine Füllkörperkolonne.

Füllkörperkolonnen sind als solche grundsätzlich geeignet und dem Fachmann bekannt. Üblicherweise haben die eingesetzten Füllkörperkolonnen einen runden, häufig symmetrischen und meistens kreis- oder ellipsenförmigen Durchmesser bzw. Querschnitt. Eine Füllkörperkolonne weist Füllkörper auf. Bei den Füllkörpern handelt es sich vorteilhafterweise um totraumarme Füllkörper mit durchbrochener Oberfläche. Beispiele für totraumarme Füllkörper mit durchbrochener Oberfläche sind insbesondere zylindrische Typen wie Pallringe, einschließlich modifizierter Pallringe, wie die Raflux-Type der Firma Rauschert, Hiflow-Ringe, Ralu-Ringe der Firma Raschig, weiterhin Super-Ringe der Firma Raschig, sowie kugelförmige Körper mit durchbrochener Kugeloberfläche wie Envi-Pac-Körper® und dergleichen. Im Allgemeinen liegen die Füllkörper in der Kolonne in Form einer regellosen Schüttung vor. Grundsätzlich sind auch geordnete Schüttungen und/oder Packungen der Füllkörper geeignet. Bei der Verwendung einer Füllkörperkolonne kann in einer geeigneten Höhe eine Flüssigkeitsverteilerplatte vorgesehen sein, um den Wirkungsgrad des Gas-Flüssigkeits-Kontakts zu verbessern.

Da das Wasser Chlorid aufweisen kann, wird zur Verhinderung der Korrosionsbildung ein korrosionsbeständiger Stahl für die Herstellung der Kolonne verwendet. Bevorzugt enthält der Stahl a) 20-30 Gew.-% Chrom, b) 3-10 Gew.-% Nickel, c) 0,1-5 Gew.-% Molybdän, d) 0-0,5 Gew.-% Stickstoff, sowie e) 0-0,1 Gew.-% Kohlenstoff. Besonders bevorzugt liegt dabei der Chromanteil zwischen 20 und 26 Gew.-%, der Molybdänanteil zwischen 2,0 und 4,5 Gew.-%, der Stickstoffanteil zwischen 0,08 und 0,5 Gew.-%, sowie der Kohlenstoffanteil maximal bei 0,05 Gew.-%.

In einer weiteren vorteilhaften Ausführungsform ist mindestens ein weiteres Element ausgewählt aus der Gruppe bestehend aus Kupfer, Mangan, Titan, Wolfram, Tantal, Silicium und/oder Mischungen hieraus zulegiert. Dabei beträgt der Gehalt des mindestens einen weiteren Elements insbesondere zwischen 0,1 und 8,0 Gew.-%. Ganz besonders bevorzugt ist es, wenn der Stahl ausgewählt ist aus der Gruppe bestehend aus Stahlwerkstoffen mit der Werkstoffnummer 1.4462 (Standard Duplex Stahl X2CrNiMoN22-5-3), 1.4410 (Superduplex Stahl X2CrNiMoN25-7-4).

In einer alternativen Ausführungsform kann die Kolonne eine Bodenkolonne sein. Die Bodenkolonne weist Kaskadenböden auf. Unter Kaskadenböden versteht man Böden, die kaskadenförmig in der Kolonne angeordnet sind. Bevorzugt weist die Kolonne gewölbte Kaskadenböden auf. Das Wasser wird bei dem erfindungsgemäßen Verfahren in die Kolonne vorzugsweise über diese gewölbten Kaskadenböden eingeführt. Die Wölbung der Böden erstreckt sich vorzugsweise über den gesamten Durchmesserbereich der Böden. Die Kaskadenböden können schalenförmig oder kugelschalenförmig gewölbt sein, wobei es sich um eine von oben gesehen konkave Wölbung handelt. Bei einer schalenförmigen Wölbung weisen die Kaskadenböden Wölbungsradien auf, die über den Durchmesserbereich der Böden variieren können. Bei einer kugelschalenförmigen Wölbung ist der Wölbungsradius über den Durchmesserbereich der Böden konstant. Die Kaskadenböden weisen vorzugsweise eine geschlossene Oberfläche auf, d. h. es befinden sich keine Durchgangslöcher, Ventile oder Glocken in bzw. auf diesen Böden.

Das erfindungsgemäße Verfahren ist insbesondere daher vorteilhaft, da das Erdölbegleitgas nach Durchführung des erfindungsgemäßen Verfahrens ohne relevante Qualitätsverschiebung in die Feuerung der nachgeschalteten Heizungsanlage eingespeist werden kann. Auf diesem Weg können bereits vorhandene Anlagen in der Peripherie der Erdölförderung genutzt werden, so dass das erfindungsgemäße Verfahren besonders wirtschaftlich ist. Dagegen müsste, insofern inertes Strippgas wie Stickstoff verwendet würde, zusätzlicher apparativer Aufwand betrieben werden, um die aromatischen Kohlenwasserstoffe vom Strippgas zu entfernen, bevor die aromatischen Kohlenwasserstoffe emissionsarm verbrannt werden können. Daher wird durch die Verwendung von Erdölbegleitgas als Strippgas kein zusätzlicher Produktstrom geschaffen, der aufwendig entsorgt werden muss. Es können die bereits vorhandenen Installationen zum Transport und zur Verbrennung des Erdölbegleitgases verwendet werden.

Das erfindungsgemäße Verfahren wird in einer Anlage ausgeführt, die neben einer Kolonne (1) weitere Anlagen in deren Peripherie aufweist. Ein Gegenstrom-Wärmetauscher (4), sowie ein Lagerstättenwasser-Spitzenvorwärmer (3) werden genutzt, um das Lagerstättenwasser auf eine ausreichende Temperatur, wie beispielsweise eine Temperatur von 70°C zu bringen, bevor es in die Kolonne (1) eingeführt wird. Das gereinigte Lagerstättenwasser wird vor seiner weiteren Verwendung wieder auf geringere Temperaturen, wie beispielsweise Temperaturen von 30°C bis 40°C, gekühlt, indem ein großdimensionierter Luftkühler (8) verwendet wird. Bei hohen Aussenlufttemperaturen ist ggf. eine weitere aktive Kühlanlage (7) mit Wärmeaustauscher (9) erforderlich. Beispielsweise kann die Rückkühlung des Lagerstättenwassers über einen Lagerstättenwasser-Rückkühlwärmetauscher (4) erfolgen, wobei der Strom (III) mit erhöhter Temperatur zur Vorwärmung von Lagerstättenwasser genutzt wird, das im weiteren Verlauf in die Kolonne (1) eingeführt wird. Weiterhin weist die Anlage einen Heizkessel (6) auf, der mit Erdölbegleitgas betrieben werden kann und zur Vorwärmung des Lagerstättenwassers dient.

### Bezugszeichenliste:

Figur 1
- 1: Kolonne
- 2: Gaspendelleitung
- 3: Spitzenvorwärmer
- 4: Gegenstrom-Wärmeaustauscher
- 5: Zufuhr Erdölbegleitgas
- 6: Heizkessel
- 7: Kühlanlage
- 8: Kühler
- 9: Wärmeaustauscher

### Beispiel

In einer kontinuierlich arbeitenden Füllkörperkolonne werden mehrere Versuche mit Lagerstättenwasser durchgeführt, das in einer Menge von 30 000 l/h zugeführt wird und eine BTEX-Konzentration von 2,8 mg/l aufweist. Im Gegenstrom zum Lagerstättenwasser wird in der Kolonne Erdölbegleitgas als Stripmedium aufwärts geführt. Dieses Nebenprodukt der Nassölaufbereitung enthält 49 Vol-% Methan, 12 Vol-% Ethan, 14 Vol-% Propan, 9 Vol-% Butane, 3 Vol-% Pentane, und 2 Vol-% Hexane und höhere Homologe sowie 3 Vol-% Stickstoff und 7 Vol-% Kohlendioxid. Der Strippprozess erfolgt ohne Kolonnenrücklauf, bei 70°C Kolonneninnentemperatur und 1,020 bar (1020 hPa) Absolutdruck. Das aufbereitete Lagerstättenwasser verlässt die Kolonne am Sumpf, das mit BTEX angereicherte und wasserdampfgesättigte Erdölbegleitgas am Kopf.

Nach der Strippung ist die BTEX-Fracht des Lagerstättenwassers erheblich reduziert und beträgt nur noch 0,3 bis 0,5 mg/l. Die Werte wurden ermittelt durch fachgerechte Probenahme des Lagerstättenwassers und anschließender Analyse nach der DIN-Methode 38407 Teil 9 "Bestimmung von Benzol und einigen Derivaten mittels Gaschromatographie".

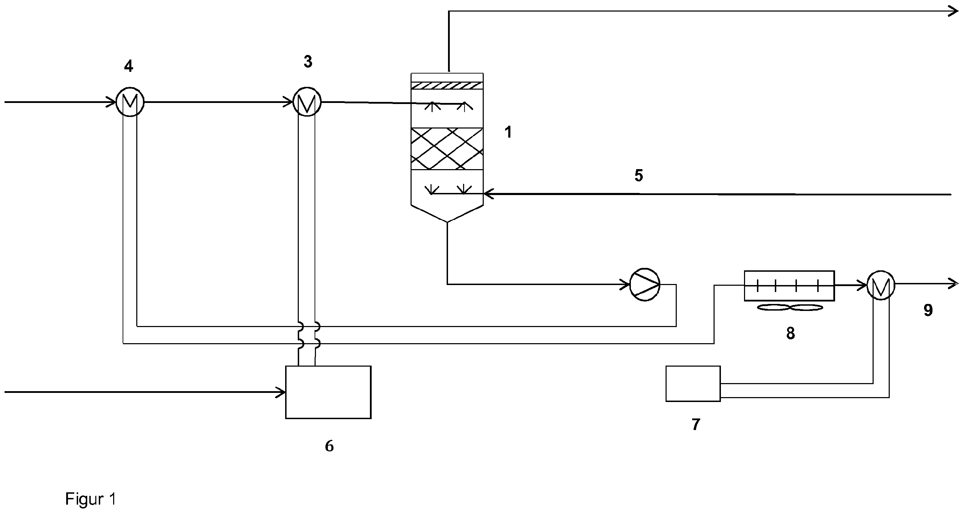

## Patentansprüche

1. Verfahren zur Aufarbeitung von Wasser enthaltend aromatische Kohlenwasserstoffe ausgewählt aus der Gruppe bestehend aus Benzol, Toluol, Ethylbenzol und Xylol, umfassend wenigstens die folgenden Schritte
(i) Einführen eines Stroms (I) enthaltend Wasser und aromatische Kohlenwasserstoffe ausgewählt aus der Gruppe bestehend aus Benzol, Toluol, Ethylbenzol und Xylol in eine Kolonne,
(ii) in Kontakt bringen des Stroms (I) mit einem zweiten Strom (II) im Gegenstrom und
(iii) Abführen eines dritten Stroms (III) enthaltend Wasser und aromatische Kohlenwasserstoffe ausgewählt aus der Gruppe bestehend aus Benzol, Toluol, Ethylbenzol und Xylol, wobei die aromatischen Kohlenwasserstoffe in einer Konzentration ≤ 3 mg/l bezogen auf das Volumen des Stroms (III) vorliegen,
**dadurch gekennzeichnet, dass** der zweite Strom (II) Erdölbegleitgas enthält, das ≥ 30 Vol% bis ≤ 75 Vol-% Methan umfasst, das Wasser in Schritt (i) eine Temperatur im Bereich ≥ 40 °C bis ≤ 80 °C aufweist, und in der Kolonne ein Druck im Bereich ≥ 200 hPa bis ≤ 1500 hPa vorliegt.

2. Verfahren nach Anspruch 1, **dadurch gekennzeichnet, dass** die aromatischen Kohlenwasserstoffe im dritten Strom (III) in einer Konzentration ≤ 1 mg/l bezogen auf das Volumen des Stroms (III) vorliegen.

3. Verfahren nach Anspruch 1, **dadurch gekennzeichnet, dass** das Erdölbegleitgas ≥ 50 Vol% bis ≤ 97 Vol-% C₁-C₁₀-Kohlenwasserstoffe enthält, bezogen auf die gesamte Zusammensetzung des Erdölbegleitgases.

4. Verfahren nach Anspruch 3, **dadurch gekennzeichnet, dass** die C₁-C₁₀-Kohlenwasserstoffe ausgewählt aus der Gruppe bestehend aus Methan, Ethan, Propan, Butan, Pentan, Hexan, Heptan, Oktan, Nonan und Decan sind.

5. Verfahren nach Anspruch 3, **dadurch gekennzeichnet, dass** das Erdölbegleitgas ≥ 50 Vol% bis ≤ 97 Vol-% C₁-C₆-Kohlenwasserstoffe enthält, bezogen auf die gesamte Zusammensetzung des Erdölbegleitgases.

6. Verfahren nach Anspruch 5, **dadurch gekennzeichnet, dass** die C₁-C₆-Kohlenwasserstoffe ausgewählt aus der Gruppe bestehend aus Methan, Ethan, Propan, Butan, Pentan und Hexan sind.

7. Verfahren nach einem oder mehreren der Ansprüche 1 bis 6, **dadurch gekennzeichnet, dass** das Wasser in Schritt (i) einen pH-Wert im Bereich ≥ 4 bis ≤ 6,5 aufweist.

8. Verfahren nach einem oder mehreren der Ansprüche 1 bis 7, **dadurch gekennzeichnet, dass** die Kolonne eine Füllkörperkolonne ist.

9. Verfahren nach einem oder mehreren der Ansprüche 1 bis 8, **dadurch gekennzeichnet, dass** das Verfahren kontinuierlich betrieben wird.

10. Verfahren nach einem oder mehreren der Ansprüche 1 bis 9, **dadurch gekennzeichnet, dass** das Wasser Lagerstättenwasser ist.

11. Verfahren nach einem oder mehreren der Ansprüche 1 bis 10, **dadurch gekennzeichnet, dass** der Strom (I) aromatische Kohlenwasserstoffe ausgewählt aus der Gruppe bestehend aus Benzol, Toluol, Ethylbenzol und Xylol in einer Konzentration ≥ 2 mg/l bis ≤ 700 mg/l, bezogen auf das Volumen des Stroms (I), enthält.

12. Verfahren nach einem oder mehreren der Ansprüche 1 bis 11, **dadurch gekennzeichnet, dass** das Erdölbegleitgas ≥ 50 Vol-% bis ≤ 97 Vol-% C₁-C₆-Kohlenwasserstoffe, ≥ 2 Vol% bis ≤ 12 Vol-% Stickstoff und ≥ 0,5 Vol-% bis ≤ 20 Vol-% Kohlendioxid enthält.

13. Verfahren nach einem oder mehreren der Ansprüche 1 bis 12, **dadurch gekennzeichnet, dass** das Erdölbegleitgas aromatische Kohlenwasserstoffe ausgewählt aus der Gruppe bestehend aus Benzol, Toluol, Ethylbenzol und Xylol in einer Menge von ≥ 0,01 Vol-% bis ≤ 0,1 Vol-% aufweist.

14. Verfahren nach einem oder mehreren der Ansprüche 1 bis 13, **dadurch gekennzeichnet, dass** das Erdölbegleitgas ≥ 30 Vol-% bis ≤ 65 Vol-% Methan umfasst.

## Claims

1. A process for workup of water comprising aromatic hydrocarbons selected from the group consisting of benzene, toluene, ethylbenzene and xylene, comprising at least the following steps:
(i) introducing a stream (I) comprising water and aromatic hydrocarbons selected from the group consisting of benzene, toluene, ethylbenzene and xylene into a column,
(ii) contacting stream (I) with a second stream (II) in countercurrent and
(iii) removing a third stream (III) comprising water and aromatic hydrocarbons selected from the group consisting of benzene, toluene, ethylbenzene and xylene, the aromatic hydrocarbons being present in a concentration of ≤ 3 mg/l based on the volume of stream (III),
wherein the second stream (II) comprises associated petroleum gas comprising ≥ 30 % by volume to ≤ 75 % by volume of methane, the water in step (i) has a temperature in the range of ≥ 40°C to ≤ 80°C, and a pressure in the range of ≥ 200 hPa to ≤ 1500 hPa is present in the column.

2. The process according to claim 1, wherein the aromatic hydrocarbons are present in the third stream (III) in a concentration of ≤ 1 mg/l based on the volume of stream (III).

3. The process according to claim 1, wherein the associated petroleum gas comprises ≥ 50 % by volume to ≤ 97 % by volume of C₁-C₁₀ hydrocarbons, based on the overall composition of the associated petroleum gas.

4. The process according to claim 3, wherein the C₁-C₁₀ hydrocarbons are selected from the group consisting of methane, ethane, propane, butane, pentane, hexane, heptane, octane, nonane and decane.

5. The process according to claim 3, wherein the associated petroleum gas comprises ≥ 50 % by volume to ≤ 97 % by volume of C₁-C₆ hydrocarbons, based on the overall composition of the associated petroleum gas.

6. The process according to claim 5, wherein the C₁-C₆ hydrocarbons are selected from the group consisting of methane, ethane, propane, butane, pentane and hexane.

7. The process according to one or more of claims 1 to 6, wherein the water in step (i) has a pH in the range of ≥ 4 to ≤ 6.5.

8. The process according to one or more of claims 1 to 7, wherein the column is a column having random packing.

9. The process according to one or more of claims 1 to 8, which is operated continuously.

10. The process according to one or more of claims 1 to 9, wherein the water is deposit water.

11. The process according to one or more of claims 1 to 10, wherein stream (I) comprises aromatic hydrocarbons selected from the group consisting of benzene, toluene, ethylbenzene and xylene in a concentration of ≥ 2 mg/l to ≤ 700 mg/l, based on the volume of stream (I).

12. The process according to one or more of claims 1 to 11, wherein the associated petroleum gas comprises ≥ 50% by volume to ≤ 97% by volume of C₁-C₆ hydrocarbons, ≥ 2% by volume to ≤ 12% by volume of nitrogen and ≥ 0.5% by volume to ≤ 20% by volume of carbon dioxide.

13. The process according to one or more of claims 1 to 12, wherein the associated petroleum gas includes aromatic hydrocarbons selected from the group consisting of benzene, toluene, ethylbenzene and xylene in an amount of ≥ 0.01% by volume to ≤ 0.1% by volume.

14. The process according to one or more of claims 1 to 13, wherein the associated petroleum gas comprises ≥ 30% by volume to ≤ 65% by volume of methane.

## Revendications

1. Procédé de traitement d'eau contenant des hydrocarbures aromatiques choisis dans le groupe constitué par le benzène, le toluène, l'éthylbenzène et le xylène, comprenant au moins les étapes suivantes :
(i) l'introduction d'un courant (I) contenant de l'eau et des hydrocarbures aromatiques choisis dans le groupe constitué par le benzène, le toluène, l'éthylbenzène et le xylène dans une colonne,
(ii) la mise en contact du courant (I) avec un deuxième courant (II) à contre-courant, et
(iii) le déchargement d'un troisième courant (III) contenant de l'eau et des hydrocarbures aromatiques choisis dans le groupe constitué par le benzène, le toluène, l'éthylbenzène et le xylène, les hydrocarbures aromatiques étant présents en une concentration ≤ 3 mg/l par rapport au volume du courant (III), **caractérisé en ce que** le deuxième courant (II) contient un gaz associé au pétrole qui comprend ≥ 30 % en volume à ≤ 75 % en volume de méthane, l'eau présente à l'étape (i) une température dans la plage allant de ≥ 40 °C à ≤ 80 °C, et une pression dans la plage allant de ≥ 200 hPa à ≤ 1 500 hPa est présente dans la colonne.

2. Procédé selon la revendication 1, **caractérisé en ce que** les hydrocarbures aromatiques sont présents dans le troisième courant (III) en une concentration ≤ 1 mg/l par rapport au volume du courant (III).

3. Procédé selon la revendication 1, **caractérisé en ce que** le gaz associé au pétrole contient ≥ 50 % en volume à ≤ 97 % en volume d'hydrocarbures en C₁-C₁₀, par rapport à l'ensemble de la composition du gaz associé au pétrole.

4. Procédé selon la revendication 3, **caractérisé en ce que** les hydrocarbures en C₁-C₁₀ sont choisis dans le groupe constitué par le méthane, l'éthane, le propane, le butane, le pentane, l'hexane, l'heptane, l'octane, le nonane et le décane.

5. Procédé selon la revendication 3, **caractérisé en ce que** le gaz associé au pétrole contient de ≥ 50 % en volume à ≤ 97 % en volume d'hydrocarbures en C₁-C₆, par rapport à l'ensemble de la composition du gaz associé au pétrole.

6. Procédé selon la revendication 5, **caractérisé en ce que** les hydrocarbures en C₁-C₆ sont choisis dans le groupe constitué par le méthane, l'éthane, le propane, le butane, le pentane et l'hexane.

7. Procédé selon une ou plusieurs des revendications 1 à 6, **caractérisé en ce que** l'eau à l'étape (i) présente un pH dans la plage allant de ≥ 4 à ≤ 6,5.

8. Procédé selon une ou plusieurs des revendications 1 à 7, **caractérisé en ce que** la colonne est une colonne à corps de remplissage.

9. Procédé selon une ou plusieurs des revendications 1 à 8, **caractérisé en ce que** le procédé est exploité en continu.

10. Procédé selon une ou plusieurs des revendications 1 à 9, **caractérisé en ce que** l'eau est de l'eau de gisements.

11. Procédé selon une ou plusieurs des revendications 1 à 10, **caractérisé en ce que** le courant (I) contient des hydrocarbures aromatiques choisis dans le groupe constitué par le benzène, le toluène, l'éthylbenzène et le xylène en une concentration de ≥ 2 mg/l à ≤ 700 mg/l, par rapport au volume du courant (I).

12. Procédé selon une ou plusieurs des revendications 1 à 11, **caractérisé en ce que** le gaz associé au pétrole contient ≥ 50 % en volume à ≤ 97 % en volume d'hydrocarbures en C₁-C₆, ≥ 2 % en volume à ≤ 12 % en volume d'azote et ≥ 0,5 % en volume à ≤ 20 % en volume de dioxyde de carbone.

13. Procédé selon une ou plusieurs des revendications 1 à 12, **caractérisé en ce que** le gaz associé au pétrole comprend des hydrocarbures aromatiques choisis dans le groupe constitué par le benzène, le toluène, l'éthylbenzène et le xylène en une quantité de ≥ 0,01 % en volume à ≤ 0,1 % en volume.

14. Procédé selon une ou plusieurs des revendications 1 à 13, **caractérisé en ce que** le gaz associé au pétrole comprend ≥ 30 % en volume à ≤ 65 % en volume de méthane.
